# EUROPEAN PATENT APPLICATION

(11) **EP 1 844 951 A1**
(43) Date of publication of application: **17.10.2007**
(21) Application number: 06112681.9
(22) Date of filing: 14.04.2006
(51) Int. Cl.: B60B 1/04, B60B 21/06

(54) **Self-locking nipple and wheel spoke**

(71) Applicant: SAPIM, 2610 Wilrijk (BE)
(72) Inventor: Moorkens, Axel, 2540 Hove (BE)
(74) Representative: Sarlet, Steven Renaat Irène

(57) **Abstract**

The invention relates to a nipple for fixing a wheel spoke to a wheel rim, comprising a body with an internally threaded axial opening having an internal screw-thread, at least a part of which shows a self-locking function as a result of which in use the threaded end of the wheel spoke is clamped in the axial opening of the nipple. The invention further relates to a wheel spoke comprising an externally threaded end having an external screw-thread at least a part of which shows a self-locking function as a result of which in use the threaded end of the wheel spoke is clamped in the axial opening of the nipple. The self-locking function is provided by a predetermined deviation in the shape (e.g. pitch, angle) of the internal/external screw-thread, chosen such that in use the threaded end of the wheel spoke is clamped in axial direction by the internal screw-thread of the nipple.

## Description

### Technical field

The present invention relates to a self-locking nipple according to the preamble of claim 1 and a self-locking wheel spoke according to the preamble of claim 11.

### Background art

From BE-A-1013147 a self-locking nipple is known which comprises a body with an internally threaded axial opening for receiving an externally threaded end of a wheel spoke. The body of the nipple is locally deformed or compressed, so that the axial opening shows a narrower part which provides a self-locking function, as a result of which in use the end of the wheel spoke is clamped in radial direction by the body of the nipple.

The nipple known from BE-A-1013147 however has the disadvantage that when it is removed from the spoke wheel end, which may for example occur during re-adjustment of the wheel, it cannot be reused.

### Disclosure of the invention

It is an aim of the present invention to provide a self-locking nipple for fixing a wheel spoke to a wheel rim which can be reused a large number of times.

This aim is achieved according to the invention with a nipple showing the technical characteristics of claim 1.

It is further an aim of the present invention to provide a self-locking wheel spoke.

This further aim of the present invention is achieved with a wheel spoke showing the technical characteristics of claim 11.

In general, according to the invention, either the shape of the internal screw-thread in the nipple only, or the shape of the external screw-thread on the wheel spoke only, or the shapes of both the screw-threads in the nipple and on the wheel spoke may be adapted to achieve the self-locking function. In this respect, any combination of a spoke and a nipple of which the shapes of the respective screw-threads are tuned to each other to achieve a self-locking function in the manner described below is held to be within the scope of the invention.

The nipple of the invention comprises a body with an internally threaded axial opening for receiving an externally threaded end of a wheel spoke. The internally threaded axial opening has an internal screw-thread, at least a part of which shows a self-locking function as a result of which in use the threaded end of the wheel spoke is clamped in the axial opening of the nipple. The self-locking function is provided by a predetermined deviation in the shape of the internal screw-thread with respect to that of the external screw-thread on the threaded end of a normal wheel spoke. The deviation is chosen in such a way that in use the threaded end of the wheel spoke is clamped in axial direction by the internal screw-thread of the nipple.

As used herein, "normal" means according to one of the norms which are commonly used in the art. An example of such a norm is DIN79012, which implies a screw-thread of 20 windings with a pitch of 0.454 mm.

An analysis of the problem of the prior art has shown that it is caused by the fact that spokes are usually manufactured in a harder material than nipples. As a result, upon screwing the spoke end into the nipple, the screw-thread in the nipple, more particularly the narrower part is deformed. As a result, after unscrewing the spoke end from the nipple, the self-locking function of the nipple has disappeared and the nipple cannot be reused.

In the nipple of the invention, the self-locking function is obtained by a predetermined deviation in the shape of the screw-thread, such that the clamping force is applied onto the spoke end in axial direction. Since the axial length of the threaded end of the spoke is longer than its diameter, the clamping force is more spread over the threaded end of the spoke, which reduces the risk of a strong local force and thus the risk of deformation of the screw-thread of the nipple. As a result, the nipple of the invention can be reused at least a number of times before the self-locking function disappears. The number of times the nipple can be reused depends on the hardness of the material in which it is manufactured.

Furthermore, the nipple of the invention shows an enhanced clamping function with respect to the nipple of the prior art. Since the clamping force is oriented in axial direction, i.e. in the direction of screwing, the spoke end is as it were pulled into the nipple. This has the advantage that the risk of loosening of the spoke can be reduced.

In a preferred embodiment of the nipple of the invention, the predetermined deviation is a deviation in the pitch of the internal screw-thread over at least a part of its length. The deviation in the pitch is preferably between 0.1 and 1.5 µm, more preferably approximately 0.5 µm.

In another preferred embodiment of the nipple of the invention, the predetermined deviation is a deviation in the angle of the internal screw-thread over at least a part of its length. The deviation in the angle is preferably between 0.1 and 1°, more preferably approximately 0.5°.

The deviation may also be applied in any other geometrical characteristic of the screw-thread known to the person skilled in the art, such as for example the thickness or the height of the windings or another characteristic. Different deviations may also be combined in a single screw-thread, such as for example a pitch deviation and an angle deviation, either over the same part or over the whole of the screw-thread or over different parts of the screw-thread. For example, one half of the screw-thread may have a deviation in pitch whereas the other half has a deviation in angle.

Each deviation may be applied over the whole of the screw-thread or over part of it. Preferably, the deviation is applied over at least half the screw-thread to ensure a sufficient spreading of the clamping force. It may be advantageous to maintain the first part of the internal screw-thread in the nipple, i.e. the part at the front of the opening, "normal" or without predetermined deviation in shape. In this way, upon screwing the spoke into the nipple, the self-locking function is only sensed after the spoke is already partly located in the nipple, which may avoid difficulty in screwing the spoke into the nipple.

Analogously, the wheel spoke of the invention comprises an externally threaded end which is provided for being received in an internally threaded axial opening in the body of a nipple for fixing the spoke to a wheel rim. The externally threaded end has an external screw-thread, at least a part of which shows a self-locking function as a result of which in use the threaded end of the wheel spoke is clamped in the axial opening of the nipple. The self-locking function is provided by a predetermined deviation in the shape of the external screw-thread with respect to that of the internal screw-thread in the axial opening of a normal nipple. The deviation is chosen in such a way that in use the threaded end of the wheel spoke is clamped in axial direction by the internal screw-thread of the nipple.

In the wheel spoke of the invention, the self-locking function is obtained by a predetermined deviation in the shape of the screw-thread, such that the clamping force is applied onto the spoke end in axial direction. Since the axial length of the threaded end of the spoke is longer than its diameter, the clamping force is more spread over the threaded end of the spoke, which reduces the risk of a strong local force and thus the risk of deformation of the screw-thread of the nipple. As a result, upon unscrewing the spoke from the nipple, the nipple may thereafter be reused to fix the same spoke. It may be that this nipple wears out after a number of times being unscrewed and replaced, but then one can simply replace the worn-out nipple by a new one, which may be a "normal" nipple.

Provided the hardness of the spoke is above that of the nipple, which is usually the case, it is thus advantageous to apply the deviation according to the invention on the spoke, because one can then use normal nipples. Furthermore, the adapted external screw-thread on the spoke is easier to construct than the adapted internal screw-thread in the nipple at least a number of times before the self-locking function disappears.

Furthermore, the wheel spoke of the invention leads to an enhanced clamping function with respect to that of the nipple of the prior art. Since the clamping force is oriented in axial direction, i.e. in the direction of screwing, the spoke end is as it were pulled into the nipple. This has the advantage that the risk of loosening of the spoke can be reduced.

In a preferred embodiment of the wheel spoke of the invention, the predetermined deviation is a deviation in the pitch of the external screw-thread over at least a part of its length. The deviation in the pitch is preferably between 0.1 and 1.5 µm, more preferably approximately 0.5 µm.

In another preferred embodiment of the wheel spoke of the invention, the predetermined deviation is a deviation in the angle of the external screw-thread over at least a part of its length. The deviation in the angle is preferably between 0.1 and 1°, more preferably approximately 0.5°.

The deviation may also be applied in any other geometrical characteristic of the screw-thread known to the person skilled in the art, such as for example the thickness or the height of the windings or another characteristic. Different deviations may also be combined in a single screw-thread, such as for example a pitch deviation and an angle deviation, either over the same part or over the whole of the screw-thread or over different parts of the screw-thread. For example, one half of the screw-thread may have a deviation in pitch whereas the other half has a deviation in angle.

Each deviation may be applied over the whole of the screw-thread or over part of it. Preferably, the deviation is applied over at least half the screw-thread to ensure a sufficient spreading of the clamping force. It may be advantageous to maintain the first part of the external screw-thread on the spoke, i.e. the part at the front of the threaded end, "normal" or without predetermined deviation in shape. In this way, upon screwing the spoke into the nipple, the self-locking function is only sensed after the spoke is already partly located in the nipple, which may avoid difficulty in screwing the spoke into the nipple.

### Brief description of the drawings

The invention will be further elucidated by means of the following description and the appended figures.

Figure 1 shows a nipple and a wheel spoke according to the invention, unassembled.

Figure 2 shows a nipple and a wheel spoke according to the invention, assembled.

Figure 3 shows a detail of the nipple and the wheel spoke of figure 2.

Figure 4 explains two of the geometrical characteristics of a screw-thread.

Figure 5 shows how the self-locking function is obtained according to the invention by means of a predetermined deviation in pitch.

Figure 6 shows how the self-locking function is obtained according to the invention by means of a predetermined deviation in angle.

### Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

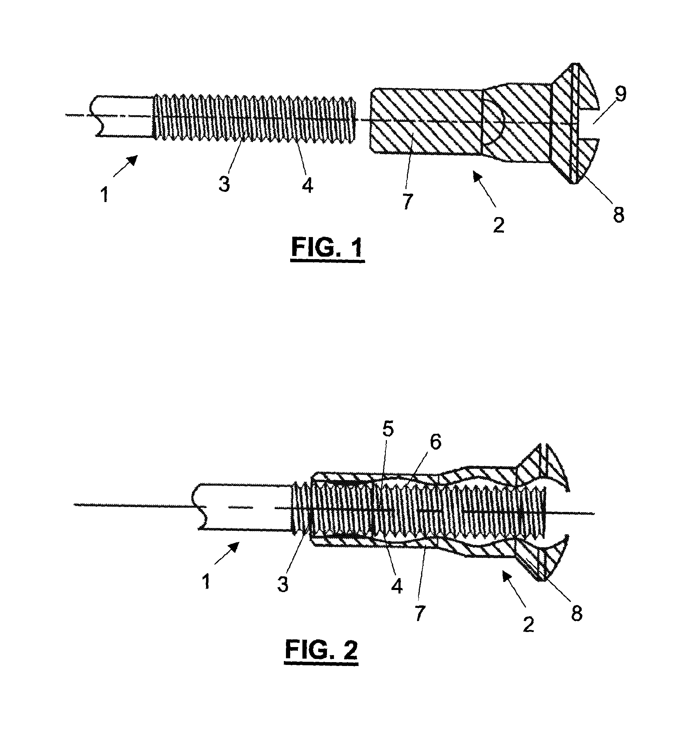

The wheel spoke 1 and the nipple 2 of figure 1 may each show the predetermined deviation according to the invention, i.e. one part may be adapted with respect to the norm or both. In case both are adapted, the skilled person will of course make sure that they do not deviate from the norm in the same way, because then no self-locking function would be achieved.

For the sake of simplicity, it is assumed here that it is the wheel spoke 1 which shows the deviation according to the invention and that the nipple 2 is a normal nipple. It is evident that the opposite is also possible.

The wheel spoke 1 has a threaded end 3 with an external screw-thread 4. This threaded end 3 is provided for being received in an internally threaded axial opening 5 in the body 7 of a nipple 2, which is in turn provided for fixing the spoke 1 to a wheel rim (not shown). The other end (not shown) of the spoke opposite the threaded end is adapted for being attached to a wheel hub (not shown).

The nipple 2 comprises a body 7 with the axial opening 5 in which an internal screw-thread 6 is provided, substantially complementary to the external screw-thread 4 on the spoke 1. The nipple further comprises a head 8, connected to the body 7, by means of which the nipple 2 is seated in a hole in the wheel rim (not shown). The head 8 shows a recess 9 with a suitable shape for receiving a tool, such as for example a screw-driver, by means of which the nipple can be screwed onto the threaded end 3 of the spoke 1.

The spoke 1 and the nipple 2 shown in the figures 1-3 are substantially in accordance with the DIN79012-norm (except for the predetermined deviation), which implies that their screw-threads 4 and 6 have 20 windings with a pitch of approximately 0.454 mm and an angle of approximately 60°. The invention may however also be applied to any other spokes and nipples known to the person skilled in the art, with any possible pitch h and any possible angle α.

In the embodiment shown in figures 1-3, the spoke 1 and nipple 2 have screw-threads 4, 6 with a single pitch. The invention may however also be applied on spokes and nipples with a double, triple or higher pitch.

According to the invention, the external screw-thread 4 of the spoke 1 shows a self-locking function as a result of which in use the threaded end 3 of the wheel spoke 1 is clamped in the axial opening 5 of the nipple 2. The self-locking function is provided by a predetermined deviation in the shape of the external screw-thread 4 with respect to that of the internal screw-thread 6 in the axial opening 5 of the nipple 2. This deviation is chosen such that in use the threaded end 3 of the wheel spoke 1 is clamped in axial direction by the internal screw-thread 6 of the nipple 2.

In order to obtain the self-locking function according to the invention, the geometrical shape of the external screw-thread 4 can be adapted by deviating the pitch, the angle, or any other geometrical characteristic known to the person skilled in the art. This is done in a predetermined way, such that the threaded end 3 still fits in the axial opening 5 of the nipple 2, which is a normal nipple, but that an axial clamping force is exerted by the internal screw-thread 6 in the nipple 2, which as it were pulls the threaded end 3 of the spoke 1 into the nipple 2.

In the embodiment shown in figures 1-3, the deviation is applied over the whole of the external screw-thread 3. Alternatively, the deviation may also be applied over only part of the screw-thread 3. For example, the first part of the external screw-thread 3, i.e. the foremost part, may be maintained "normal" or without the predetermined deviation in shape.

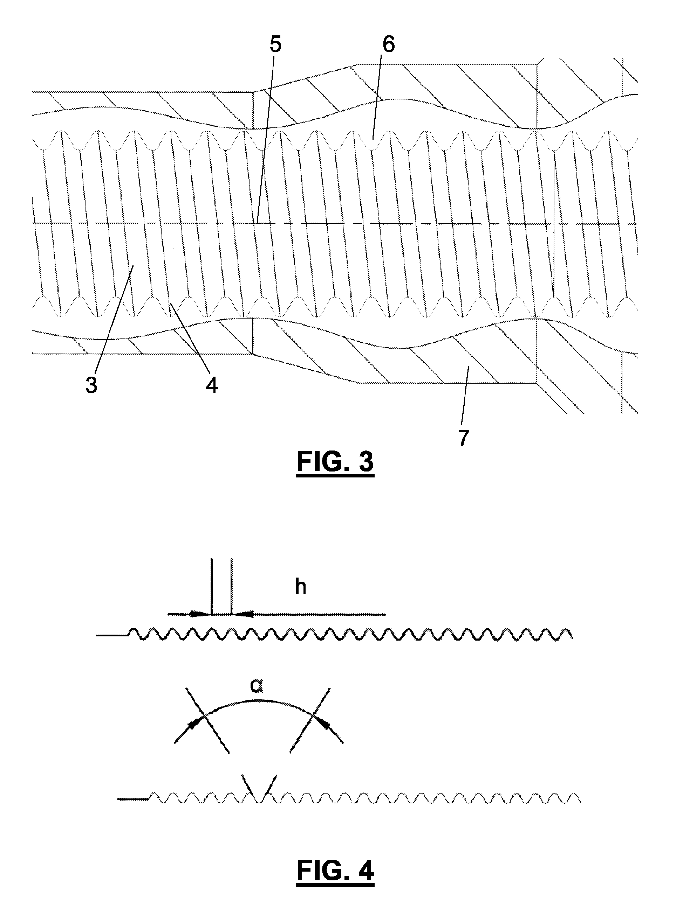

Figure 4 explains the meaning of the pitch h and the angle α of a screw-thread 4, 6. The pitch h is the distance between two consecutive windings and the angle α is the angle between the side planes of two consecutive windings.

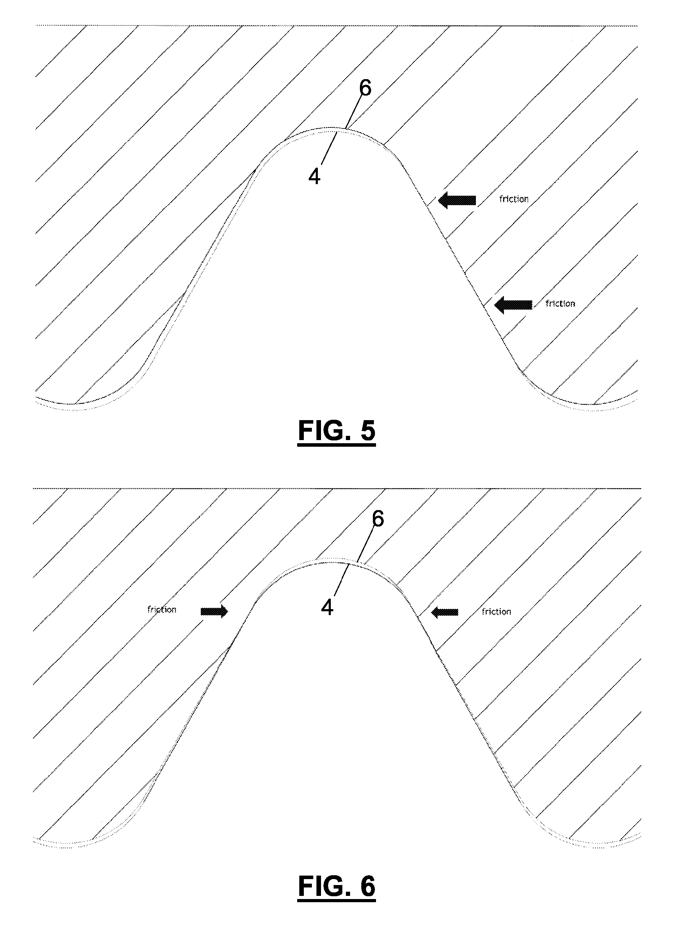

In a first embodiment, as shown in figure 5, the pitch h can be deviated from the norm. For spokes according to the DIN79012-norm, the deviation can for example be 0.5 µm, which leads to a difference of 10 µm in length of the whole external screw-thread 4 with respect to the internal screw-thread 6 in the normal nipple 2. This difference in length causes the spoke to be clamped in the nipple, so that there is an enhanced contact between surface parts of the spoke and the nipple. This in turn causes frictional forces, which counteract rotation of the spoke 1 in the nipple 2. As a result, the spoke 1 becomes "self-locked" in the nipple 2.

In a second embodiment, as shown in figure 6, the angle α can be deviated from the norm. For spokes according to many norms, among others the DIN79012-norm, the angle α is 60°. A suitable deviation is for example 0.5°. This difference in angle again causes the spoke to be clamped in the nipple, so that there is an enhanced contact between surface parts of the spoke and the nipple, as a result of which the self-locking effect is achieved.

The deviation may also be applied in any other geometrical characteristic of the screw-threads 4, 6 known to the person skilled in the art, such as for example the thickness or the height of the windings or another characteristic. Different deviations may also be combined in a single screw-thread, such as for example a pitch deviation and an angle deviation, either over the same part or over the whole of the screw-thread or over different parts of the screw-thread. For example, one half of the screw-thread may have a deviation in pitch whereas the other half has a deviation in angle. Each deviation may be applied over the whole of the screw-thread or over part of it.

The spoke 1 and the nipple 2 are preferably constructed in one of the following materials: aluminium, steel, brass or any other material known to the person skilled in the art. The spoke 1 will usually be constructed in a harder material than the nipple 2.

The spoke 1 and the nipple 2 can be adapted for use in bicycle wheels, motorcycle wheels or any other wheels of any other vehicles known to the person skilled in the art.

## Claims

1. A nipple (2) for fixing a wheel spoke (1) to a wheel rim, comprising a body (7) with an internally threaded axial opening (5) for receiving an externally threaded end (3) of a wheel spoke (1), the internally threaded axial opening (5) having an internal screw-thread (6) at least a part of which shows a self-locking function as a result of which in use the threaded end (3) of the wheel spoke (1) is clamped in the axial opening (5) of the nipple (2), **characterised in that** the self-locking function is provided by a predetermined deviation in the shape of the internal screw-thread (6) with respect to that of the external screw-thread (4) on the threaded end (3) of a normal wheel spoke (1), said deviation being chosen such that in use the threaded end (3) of the wheel spoke (1) is clamped in axial direction by the internal screw-thread (6) of the nipple (2).

2. A nipple (2) according to claim 1, **characterised in that** said internal screw-thread (6) has a given pitch (h) which substantially corresponds to that of the external screw-thread (4) on a normal wheel spoke (1), said predetermined deviation being a deviation in said pitch (h) over at least part of the internal screw-thread (6).

3. A nipple (2) according to claim 2, **characterised in that** said deviation in said pitch (h) is between 0.1 and 1.5 µm.

4. A nipple (2) according to claim 3, **characterised in that** said deviation in said pitch (h) is approximately 0.5 µm.

5. A nipple (2) according to claim 1, **characterised in that** said internal screw-thread (6) has a given angle (α) which substantially corresponds to that of the external screw-thread (4) on a normal wheel spoke (1), said predetermined deviation being a deviation in said angle (α) over at least part of the internal screw-thread (6).

6. A nipple (2) according to claim 5, **characterised in that** said deviation in said angle (α) is between 0.1 and 1°.

7. A nipple (2) according to claim 5, **characterised in that** said deviation in said angle (α) is approximately 0.5°.

8. A nipple (2) according to any one of the claims 1-7, **characterised in that** said internal screw-thread (6) has around 20 windings and a pitch of approximately 0.454 mm.

9. A nipple (2) according to any one of the claims 1-8, **characterised in that** said deviation is applied over at least half of the screw-thread.

10. A nipple (2) according to any one of the claims 1-8, **characterised in that** said deviation is applied over substantially the whole of the screw-thread.

11. A wheel spoke (1) comprising an externally threaded end (3) which is provided for being received in an internally threaded axial opening (5) in the body of a nipple (2) for fixing the spoke (1) to a wheel rim, the externally threaded end (3) having an external screw-thread (4), **characterised in that** at least a part of the external screw-thread (4) shows a self-locking function as a result of which in use the threaded end (3) of the wheel spoke (1) is clamped in the axial opening (5) of the nipple (2), the self locking function being provided by a predetermined deviation in the shape of the external screw-thread (4) with respect to that of the internal screw-thread (6) in the axial opening (5) of a normal nipple (2), said deviation being chosen such that in use the threaded end (3) on the wheel spoke (1) is clamped in axial direction by the internal screw-thread (6) of the nipple (2).

12. A wheel spoke (1) according to claim 11, **characterised in that** said external screw-thread (4) has a given pitch (h) which substantially corresponds to that of the internal screw-thread (6) in a normal nipple (2), said predetermined deviation being a deviation in said pitch (h) over at least part of the external screw-thread (4).

13. A wheel spoke (1) according to claim 12, **characterised in that** said deviation in said pitch (h) is between 0.1 and 1.5 µm.

14. A wheel spoke (1) according to claim 13, **characterised in that** said deviation in said pitch (h) is approximately 0.5 µm.

15. A wheel spoke (1) according to claim 11, **characterised in that** said external screw-thread (4) has a given angle (α) which substantially corresponds to that of the internal screw-thread (6) in a normal nipple (2), said predetermined deviation being a deviation in said angle (α) over at least part of the external screw-thread (4).

16. A wheel spoke (1) according to claim 15, **characterised in that** said deviation in said angle (α) is between 0.1 and 1°.

17. A wheel spoke (1) according to claim 15, **characterised in that** said deviation in said angle (α) is approximately 0.5°.

18. A wheel spoke (1) according to any one of the claims 11-17, **characterised in that** said external screw-thread (4) has around 20 windings and a pitch of approximately 0.454 mm.

19. A wheel spoke (1) according to any one of the claims 11-18, **characterised in that** said deviation is applied over at least half of the external screw-thread (4).

20. A wheel spoke (1) according to any one of the claims 11-18, **characterised in that** said deviation is applied over substantially the whole of the external screw-thread (4).
